# EUROPEAN PATENT APPLICATION

(11) **EP 1 936 992 A1**
(43) Date of publication of application: **25.06.2008**
(21) Application number: 07123356.3
(22) Date of filing: 17.12.2007
(51) Int. Cl.: H04N 7/24, H04N 5/783

(54) **Method of and apparatus for encoding/decoding multimedia data with preview function**

(30) Priority: 21.12.2006 KR 20060131953
(71) Applicant: Samsung Electronics Co., Ltd, Suwon-si, Gyeonggi-do 442-742 (KR)
(72) Inventor: Park, Sung-il, Gyeonggi-do (KR)
(74) Representative: Walaski, Jan Filip

(57) **Abstract**

Provided are a method and apparatus for encoding/decoding multimedia data with a preview function. The method of encoding multimedia data comprises setting a plurality of storage regions according to signal play modes, grouping multimedia data into a plurality of groups according to the signal play modes, and allocating the groups of multimedia data to the plurality of storage regions. The method of decoding multimedia data includes setting a signal play mode, separating a storage region corresponding to the set signal play mode from the multimedia data, identifying frame data of the separated storage region, and decoding the identified frame data into the original signal.

## Description

The present invention generally relates to a multimedia system, and more particularly, to encoding/decoding multimedia data with a preview function.

In recent times, the number of services for downloading multimedia data such as movies has increased. With an increase in network bandwidth, the volume of multimedia content has also increased. However, multimedia content does not contain preview data. Conventional preview data is supplied in a separate stream by a multimedia provider. A user receives preview data separately, when downloading multimedia content.

As such, a user of a terminal cannot check the contents of the multimedia content until downloading is complete. Although a content server may transmit multimedia content in real time, the display quality of the multimedia content may be low due to current bandwidth constraints.

Moreover, in order to check the content of MP3 audio data, a user of a conventional MP3 player has to wait until the highlight of audio data has been completely downloaded and is played.

The present invention provides a method of encoding multimedia data, in which multimedia data is separately stored in different containers according to function in order to support various modes such as a slide show mode, a preview mode, an entire content view mode, and the like as well for sequential accessing during content playback.

The present invention also provides a method of decoding multimedia data, in which the multimedia data is grouped into a plurality of storage regions according to a play mode.

The present invention also provides an apparatus for encoding multimedia data using the method of encoding multimedia data.

The present invention also provides an apparatus for decoding multimedia data using the method of decoding multimedia data.

The present invention also provides a multimedia terminal using the method of encoding/decoding multimedia data.

According to one aspect of the present invention, there is provided a method of encoding multimedia data. The method includes setting a plurality of storage regions according to signal play modes, grouping multimedia data into a plurality of groups according to the signal play modes, and allocating the groups of multimedia data to the plurality of storage regions.

According to another aspect of the present invention, there is provided a method of decoding multimedia data that has been grouped into a plurality of storage regions according to signal play modes. The method includes setting a signal play mode, separating a storage region corresponding to the set signal play mode from the multimedia data in the set signal play mode, identifying frame data of the separated storage region, and decoding the identified frame data into the original signal.

According to another aspect of the present invention, there is provided an apparatus for encoding multimedia data. The apparatus includes a frame grouping information generation unit setting a plurality of containers according to signal play modes and generating header information for the containers, a frame information generation unit generating frame data information to be allocated to the containers, and a frame allocation unit allocating the frame data information to the containers.

According to another aspect of the present invention, there is provided an apparatus for decoding multimedia data that has been allocated to a plurality of containers according to signal play modes. The apparatus includes a container decoder separating the containers from a received stream according to the signal play modes and decoding header information added to the containers, a frame decoder extracting frame data from the containers decoded by the container decoder and extracting additional information of the frame data, and a data decoder decoding the frame data decoded by the frame decoder into a video/audio signal.

The above and other features and advantages of the present invention will become more apparent by describing in detail exemplary embodiments thereof with reference to the attached drawings in which:
FIG. 1 illustrates a related art multimedia data format;
FIG. 2 illustrates a new multimedia data format according to an exemplary embodiment of the present invention;
FIG. 3 illustrates an extended multimedia data format according to an exemplary embodiment of the present invention;
FIG. 4 illustrates a frame structure according to an exemplary embodiment of the present invention;
FIG. 5 illustrates a container structure according to an exemplary embodiment of the present invention;
FIG. 6 is a detailed block diagram of an apparatus for encoding multimedia data according to an exemplary embodiment of the present invention;
FIG. 7 is a detailed block diagram of an apparatus for decoding multimedia data according to an exemplary embodiment of the present invention;
FIG. 8 is a flowchart of a method of encoding multimedia data according to an exemplary embodiment of the present invention; and
FIG. 9 is flowchart of a method of decoding multimedia data according to an exemplary embodiment of the present invention.

Hereinafter, exemplary embodiments of the present invention will be described in detail with reference to the accompanying drawings. It should be noticed that like reference numerals refer to like elements illustrated in one or more of the drawings. In the following description of exemplary embodiments of the present invention, a detailed description of known functions and configurations incorporated herein will be omitted for conciseness and clarity.

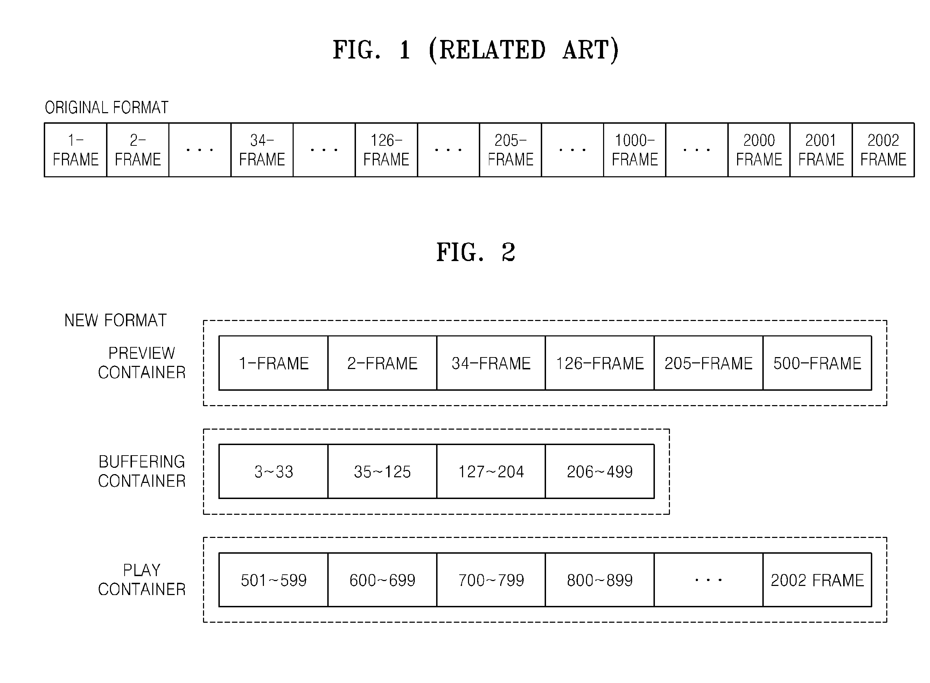

FIG. 1 illustrates a related art multimedia data format.

Referring to FIG. 1, multimedia data is composed of a plurality of frames. For example, the related art multimedia data may be composed of 1^{st} through 2002^{nd} frames.

FIG. 2 illustrates a new multimedia data format according to an exemplary embodiment of the present invention.

Referring to FIG. 2, the new multimedia data format includes a preview container for storing preview data, a buffering container, and a play container. These containers may exist in a single file or in different files.

The preview container stores only data of a frame to be independently displayed or data of a frame to be independently processed from among the contents. For example, as illustrated in FIG. 2, the preview container may store data of intra (I) frames which in this case are frame 1, frame 2, frame 34, frame 126, frame 205, and frame 500 from among all the frames of the multimedia data. The I frames can be independently decoded without reference to other frames. Since the I frames can be processed independently, a user terminal can display several still pictures to a user using only the preview container. The display of several still pictures is generally called a slide show.

The buffering container stores frame data for providing a preview in the form of a moving picture. For example, as illustrated in FIG. 2, the buffering container may store frames 3 through 33, frames 35 through 125, frames 127 through 204, and frames 206 through 499 from among all the frames of the multimedia data. The buffering container stores predictive (P) frames unlike the I frames stored in the preview container and thus the size of each frame in the buffering container is not large. That is, the buffering container stores data that is to be played in conjunction with frame data of the preview container. The play of data in conjunction with the frame data of the preview container means that the frame data of the buffering container is output successively after the output of the frame data of the preview container during content playback. Thus, if the data is in a format that has the buffering container, the user can view a preview in the form of a moving picture. The play container stores the remaining frames that have not been configured as the preview. For example, as illustrated in FIG. 2, the play container may store frames 501 through 599, frame 600 through 699, frames 700 through 799, frames 800 through 899, and frames 900 through 2002 from among all the frames of the multimedia data. The play container is connected with the preview container and the buffering container in order to be used when a full moving picture is provided to the user. In other words, content is displayed to the user sequentially from the initial picture to the last picture.

There may exist three play modes, i.e., a slide show mode, a preview mode, and a play mode according to the format of the data. The play mode may indicate how the data is to be played.

In the slide show mode, pictures are output onto a screen one by one using frame data stored in the preview container.

In the preview mode, a preview moving picture is displayed to the user using data of the preview container and data of the buffering container.

In the play mode, the full moving picture is output to the user according to a time order of the frames using data stored in all the three containers.

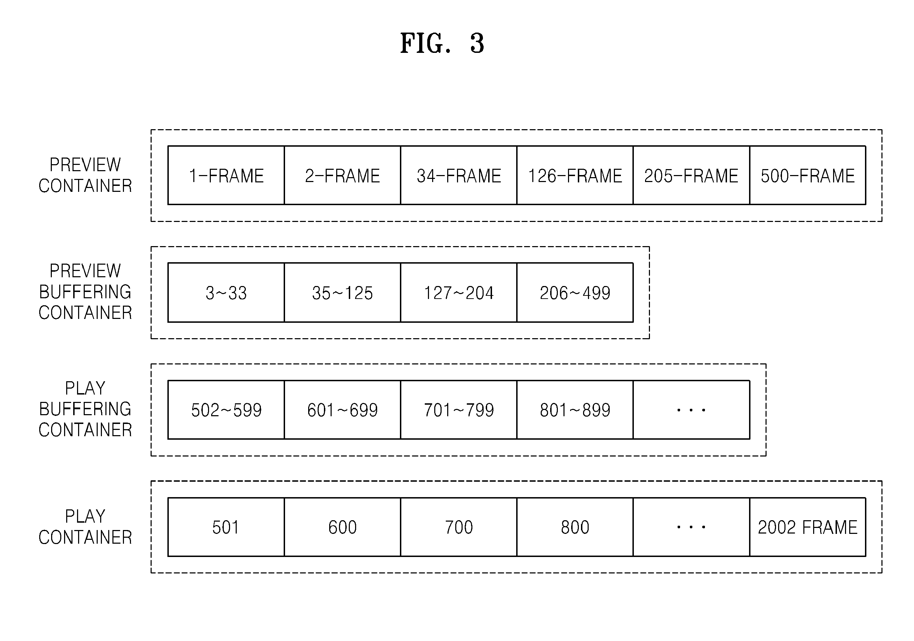

FIG. 3 illustrates an extended multimedia data format according to an exemplary embodiment of the present invention.

The extended multimedia data format further includes a play buffering container in addition to containers included in the new format illustrated in FIG. 2. The play buffering container stores a portion of data of the play container for a high-quality Internet streaming service. For example, as illustrated in FIG. 3, the play buffering container may store frames 502 through 599, frames 601 through 699, frames 701 through 799, frames 801 through 899, etc. In this way, the extended multimedia data format minimizes data required for streaming. In another exemplary embodiment of the present invention, to provide a high-quality Internet movie service to the user, only the preview container, the buffering container, and the play buffering container may be transmitted to the user. The user can preview content using these transmitted containers. During the preview, data of the play buffering container may not be used. When the user views the entire content later, the user may download only data of the play container. Such a multimedia service scheme can significantly reduce a transmission bandwidth when compared to the streaming of the entire multimedia data.

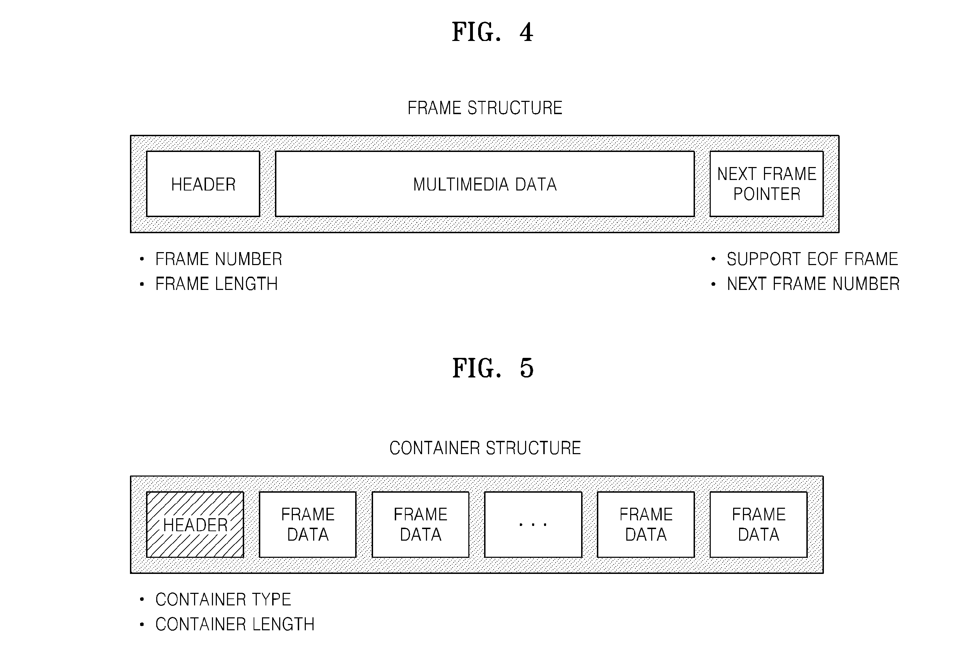

FIG. 4 illustrates a frame structure according to another exemplary embodiment of the present invention.

Referring to FIG. 4, the frame structure includes a header, multimedia data, and a next frame pointer. In the header, frame identification information such as a frame number and a frame length is recorded. In another exemplary embodiment of the present invention, a flag indicating whether the pointing information of the next frame is included in the frame structure, is recorded in the header. In the next frame pointer, address information and end-of-time (EOF) information of data of the next frame are recorded.

FIG. 5 illustrates a container structure according to an exemplary embodiment of the present invention.

The container structure includes a header and frame data. The frame data varies with a signal play mode. In the header, container characteristic information such as a container type and a container length is recorded.

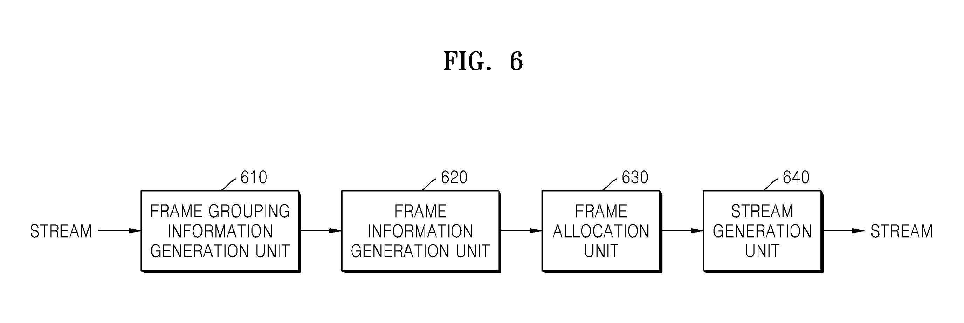

FIG. 6 is a detailed block diagram of an apparatus for encoding multimedia data according to an exemplary embodiment of the present invention.

Referring to FIG. 6, the apparatus includes a frame grouping information generation unit 610, a frame information generation unit 620, a frame allocation unit 630, and a stream generation unit 640.

The frame grouping information generation unit 610 sets a plurality of containers according to signal play modes and generates header information regarding each of the containers. For example, the frame grouping information generation unit 610 sets a preview container, a buffering container, and a play container.

The frame information generation unit 620 generates frame information such as a header and a next frame pointer for frame data to be contained in each container. The frame allocation unit 630 allocates the frame information and the frame data to each container generated by the frame grouping information generation unit 610.

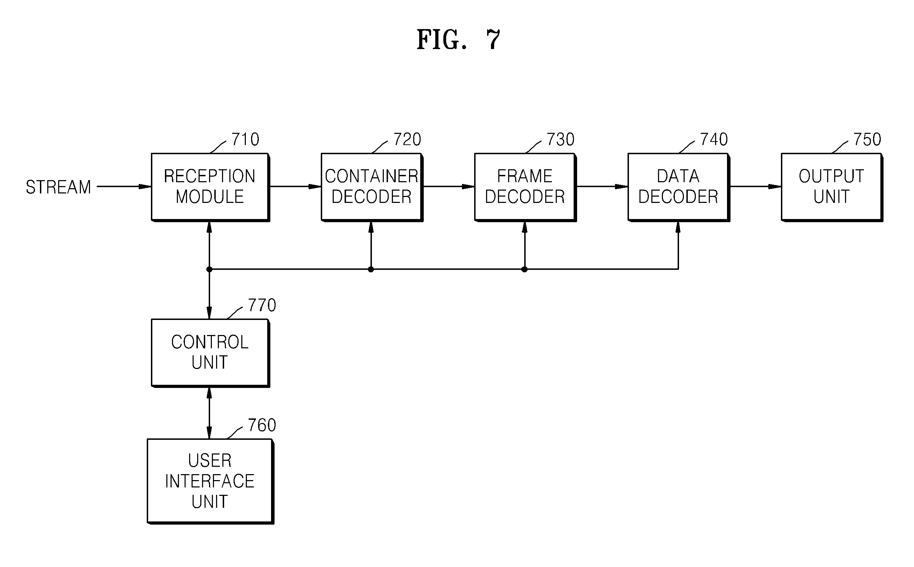

The stream generation unit 640 generates a file or a broadcasting stream signal based on frame data allocated to each container by the frame allocation unit 630. FIG. 7 is a detailed block diagram of an apparatus for decoding multimedia data according to an exemplary embodiment of the present invention.

Referring to FIG. 7, the apparatus includes a reception module 710, a container decoder 720, a frame decoder 730, a data decoder 740, an output unit 750, a control unit 770, and a user interface unit 760.

The reception module 710 receives a data stream which may be embodied as a file or a radio frequency (RF) signal. The reception module 710 extracts a bitstream from the RF signal or reads a stored file.

The container decoder 720 separates each container from a file or a bitstream received by the reception module and decodes header information of each container.

The frame decoder 730 extracts frame data from each container decoded by the container decoder 720 and extracts header information and next frame pointer information added to the frame data.

The data decoder 740 decodes frame data extracted by the frame decoder 730 to the original video/audio signal.

The output unit 750 displays the video/audio signal decoded by the data decoder 740 or plays the decoded video/audio signal as sound.

The user interface unit 760 interfaces with the user through a button or an on screen display (OSD) menu for the selection of a signal play mode or a selection of other functions.

The control unit 770 receives a user interface signal through the user interface unit 760 to control other components. The control unit 770 also determines a signal play mode of multimedia data received by the reception module 710.

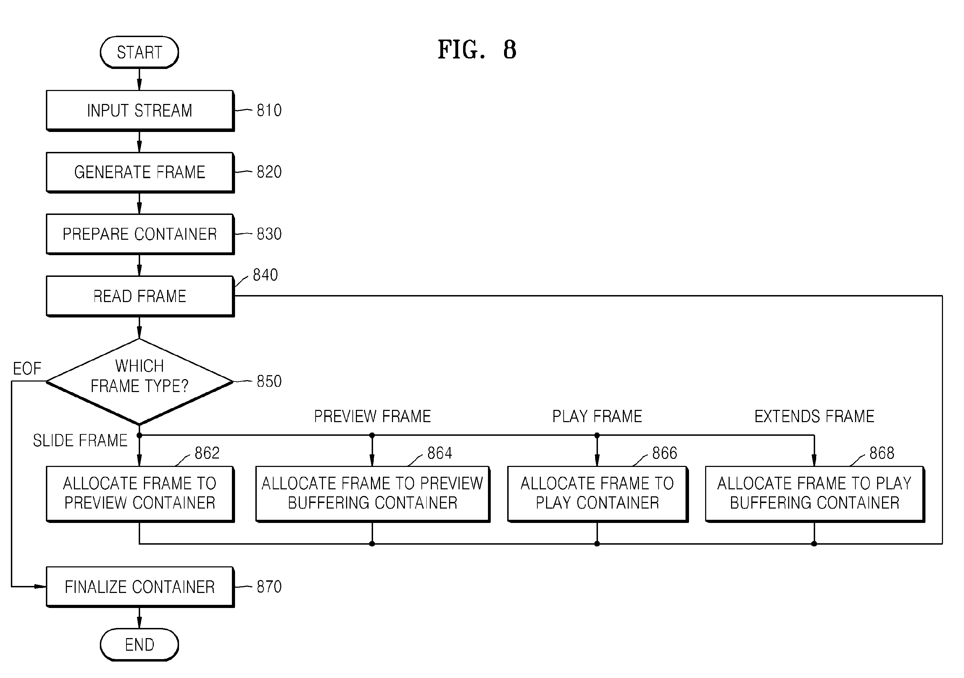

FIG. 8 is a flowchart of a method of encoding multimedia data according to an exemplary embodiment of the present invention.

First, in operation 810, a data stream and stream information are input by a content provider. The stream information may include the order of frames, the number of containers, and container types.

Next, in operation 820, a frame to which a header and additional information are added is generated.

In operation 830, a plurality of storage regions, e.g., a slide container, a preview container, a play container, and an extension container, are prepared according to signal play modes.

Next, frame data is grouped into a plurality of groups of frames, e.g., preview frames, buffering frames, play frames, and extension frames, according to the play mode.

The grouped frame data is read in operation 840 to check a frame type in operation 850.

At this time, if the frame type is a slide frame, the frames are allocated to the preview container in operation 862.

If the frame type is a preview frame, the frames are allocated to the preview buffering container in operation 864.

If the frame type is a play frame, the frames are allocated to the play container in operation 866.

If the frame type is an extension frame, the frames are allocated to the play buffering container in operation 868.

After completion of frame allocation to the containers, end-of-frame (EOF) information of a frame is detected and then container finalization is performed in operation 870.

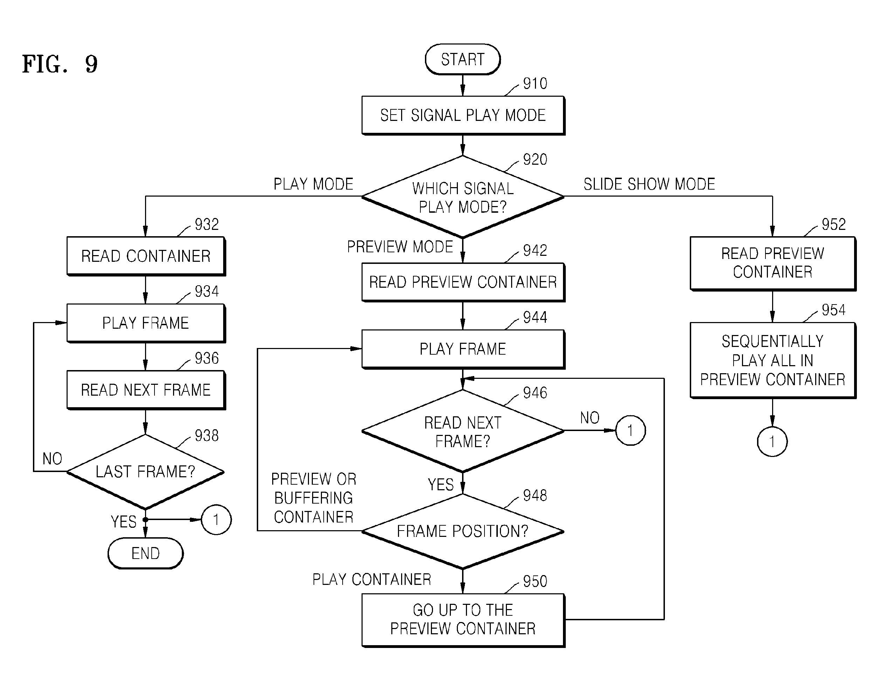

FIG. 9 is a flowchart of a method of decoding multimedia data according to an exemplary embodiment of the present invention.

First, in operation 910, a signal play mode is set through a user interface.
In operation 920, the set signal play mode is checked to determine the container to be read.

If the set play signal mode is a slide show mode, a preview container is read in operation 952. Next, frames of the preview container are sequentially output in operation 954. Output interval information is included in the header of the preview container.

If the set play signal mode is a preview mode, a preview container is read in operation 942. A frame stored in the preview container is decoded and played in operation 944. In operation 946, it is checked if there is a next frame by referring to additional information of the frame just played. In operation 948, if a next frame exists, it is checked in which container the next frame is stored. If the next frame is stored in the preview container or the preview buffering container, the frame stored in the preview container or the preview buffering container is decoded and played. If the next frame is stored in the preview play container, the next frame following a previously decoded frame in the preview container is decoded and played in operation 950. If a next frame pointer is included in a frame currently being played, a frame pointed by the next frame pointer is decoded. Otherwise, the next frame following the current frame is decoded.

If the set play signal mode is a play mode, it is checked in which container an initial frame to be played is stored. Thus, a container, generally the preview container, in which the initial frame is stored is read by referring to frame order information recorded in the header of a frame, in operation 932. In operation 934, the initial frame stored in the preview container is decoded and played. The next frame is read in operation 936 and it is checked if the next frame is the last frame in operation 938. If the next frame is not the last frame, the next frame is decoded and played. If the next frame is the last frame, frame playback is terminated. In this way, all the frames stored in the play container and the other containers are played. If there is a next frame pointer added to each frame, a frame pointed by the next frame pointer is decoded. Otherwise, the next frame following the current frame is decoded.

According to another exemplary embodiment of the present invention, the play mode may be preset by an application provider. In other words, if content using a new multimedia data format is downloaded over the Internet network, a play mode may be automatically executed as follows.

First, if content is downloaded over the Internet network, only data of the preview container is input and thus the data is output onto a screen in the slide show mode.

After the entire data of the preview container is downloaded, data of the buffering container is input. Thus, the data of the buffering container is output to the user successively from the data of the preview container has been output as a preview screen, i.e., highlights of the content are output in the form of a moving picture. Once all of the data of the buffering container is downloaded, data of the play container is input. Thus, a full moving picture is output onto the screen. At this time, the starting point of the content may differ according to an average reception bandwidth. In other words, in the case of a low download bandwidth, playback may be interrupted during user's viewing. In this case, the data of the play container is further downloaded and then full content is sequentially output according to the time order.

As described above, according to the present invention, data efficiency can be improved because it is not necessary to transmit a separate stream of preview data. An internet movie theater requires a wide bandwidth to provide a high-quality service. Therefore, by transmitting preview data in advance and then sequentially transmitting remaining data with assignment of digital rights management (DRM), a high-quality service can be provided with a narrow bandwidth. Moreover, according to the present invention, various services can be provided at the time of downloading multimedia data. For example, during downloading of a multimedia moving picture, a slide show can be implemented using only intra frame data. If frame data of the buffering container is downloaded after all the infra frame data is downloaded, the user can view the preview. Upon finishing viewing the preview, the user can view the full moving picture.

In addition, if multimedia data is encoded according to the present invention, the terminal outputs preview data, e.g., the highlight of audio data that has been fully downloaded, in a file search mode. Therefore, the user can rapidly find a main file or an audio file.

Meanwhile, the present invention can also be embodied as a computer-readable program stored on a computer-readable recording medium. The computer-readable recording medium may be any data storage device that can store data which can be thereafter read by a computer system. Examples of computer-readable recording media include read-only memory (ROM), random-access memory (RAM), CD-ROMs, magnetic tapes, floppy disks, optical data storage devices, and carrier waves. The computer-readable recording medium can also be distributed over a network of coupled computer systems so that the computer-readable program is stored and executed in a decentralized fashion.

While the present invention has been particularly shown and described with reference to exemplary embodiments thereof, it will be understood by those of ordinary skill in the art that various changes in form and detail may be made therein without departing from the scope of the present invention as defined by the following claims.

## Claims

1. A method of encoding multimedia data, the method comprising:
setting a plurality of storage regions according to a play mode;
grouping multimedia data into a plurality of groups according to the play mode; and
allocating the groups of multimedia data to the plurality of storage regions.

2. The method of claim 1, wherein the plurality of storage regions correspond to containers including a plurality of frames.

3. The method of claim 1 or 2, wherein the plurality of storage regions comprise a preview container for storing data of frames to be output without reference to other frames, a buffering container for storing data of frames connected with frame data of the preview container, a play container for storing data of all frames excluding the frames stored in the preview container and the buffering container, and a play buffering container for storing a portion of the frame data connected with the frame data of the preview container.

4. The method of claim 3, wherein each of the containers have added thereto header information in which a characteristic of the container is recorded.

5. The method of any one of the preceding claims, wherein the play mode is one of a slide show mode, a preview mode, and a play mode.

6. The method of any one of the preceding claims, wherein each of the plurality of storage regions includes at least one frame, the at least one frame comprising multimedia data and header information, wherein frame identification information is recorded in the header information.

7. The method of claim 6, wherein the at least one frame includes pointing information that points to a next frame.

8. The method of claim 7, wherein a flag indicating whether pointing information is included in the frame, is added to the header of the at least one frame.

9. A method of decoding multimedia data that has been grouped into a plurality of storage regions according to signal play modes, the method comprising:
setting a signal play mode;
separating the plurality of storage regions corresponding to the set signal play mode from the multimedia data;
identifying frame data of the separated storage region; and
decoding the identified frame data into the original signal.

10. The method of claim 9, wherein the separation of the storage region comprises separating a container that stores data according to a signal play mode, wherein the signal play mode is one of a slide show mode, a preview mode, and a play mode.

11. The method of claim 9 or 10, wherein the plurality of storage regions comprise a preview container for storing data of frames to be output without reference to other frames, a buffering container for storing data connected with frame data of the preview container, a play container for storing data of all frames excluding the data of the frames stored in the preview container and the buffering container, and a play buffering container for storing a portion of the frame data connected with the frame data of the preview container, and the decoding of the multimedia data further comprises:
sequentially decoding data of frames stored in the preview container in a slide show mode;
decoding frame data stored in the preview container and the buffering container in a preview mode; and
decoding frame data stored in the preview container and the play container in a play mode.

12. The method of claim 11, further comprising, in the preview mode:
reading the preview container and decoding the frame data stored in the preview container;
checking in which container a next frame is stored; and
decoding and playing the frame data stored in one of the preview container and the buffering container if the next frame is stored in the preview container or the buffering container and decoding the next frame in the preview container if the next frame is stored in the play container.

13. The method of claim 11 or 12, further comprising, in the play mode;
checking in which container a frame to be played is stored;
reading the container that stores the frame and decoding the frame stored in the container; and
continuing decoding until a next frame is the last frame.

14. An apparatus for encoding multimedia data, the apparatus comprising:
a frame grouping information generation unit for setting a plurality of containers according to signal play modes, and generating header information for the plurality of containers;
a frame information generation unit for generating frame data information and frame data to be allocated to the containers; and
a frame allocation unit for allocating the frame data information and the frame data to the plurality of containers.

15. The apparatus for encoding multimedia data according to claim 14, wherein the frame data information is header information and next frame pointer information added to the frame data.

16. An apparatus for decoding multimedia data that has been allocated to a plurality of containers according to signal play modes, the apparatus comprising:
a container decoder for separating the plurality of containers from a received stream according to the signal play modes, and decoding header information added to the containers;
a frame decoder for extracting frame data from the containers separated by the container decoder, and extracting additional information of the frame data; and
a data decoder for decoding the frame data extracted by the frame decoder into a video/audio signal.

17. The apparatus for decoding multimedia data according to claim 16, wherein the additional information is header information and next frame pointer information added to the frame data.

18. A multimedia terminal comprising:
the apparatus according to claim 16 or 17; and
a control unit for determining a signal play mode.
